# EUROPEAN PATENT APPLICATION

(11) **EP 4 675 989 A1**
(43) Date of publication of application: **07.01.2026**
(21) Application number: 24762982.7
(22) Date of filing: 08.02.2024
(51) Int. Cl.: H04L 41/0896

(54) **BANDWIDTH ESTIMATION METHOD AND APPARATUS, AND ELECTRONIC DEVICE AND STORAGE MEDIUM**

(30) Priority: 28.02.2023 CN 202310196061
(71) Applicant: Douyin Vision Co., Ltd., Beijing 100041 (CN)
(72) Inventor: TANG, Hui, Beijing 100028 (CN)
(74) Representative: Isarpatent
(86) International application number: PCT/CN2024/076967
(87) International publication number: WO 2024/179299

(57) **Abstract**

Provided in the present disclosure are a bandwidth estimation method and apparatus, and an electronic device and a storage medium. The bandwidth estimation method comprises: in response to determining the occurrence of congestion in a network, sending a first padding data packet at a first code rate within a first time period, wherein the first code rate is a code rate corresponding to a historical estimated bandwidth; measuring a first bandwidth of the network on the basis of the first padding data; sending a second padding data packet at a second code rate within a second time period after the first time period, wherein the second code rate is a code rate corresponding to the first bandwidth, and the sum of the first time period and the second time period is a network congestion measurement duration; and determining, as the bandwidth of the network, a maximum bandwidth, which is measured within the network congestion measurement duration.

## Description

The present application claims priority and benefits to a Chinese patent application No. 202310196061.9, filed on February 28, 2023. The full content of the above Chinese patent application is hereby incorporated by reference as a part of the present application.

### TECHNICAL FIELD

The present disclosure relates to a method for bandwidth estimation, an apparatus, an electronic device and a storage medium.

### BACKGROUND

In the event of sudden network congestion, it is necessary to accurately estimate the capacity of a network at that time. Usually, the bandwidth of the current network may be estimated by sending redundant data packets. However, the accuracy of this method for bandwidth estimation is relatively low.

### SUMMARY

Embodiments of the present disclosure provide a method for bandwidth estimation, an apparatus, an electronic device and a storage medium, which may solve problems in bandwidth estimation in related technologies.

In a first aspect, there is provided a method for bandwidth estimation, and the method includes: in response to determining that congestion occurs in a network, sending a first padding data packet at a first bit rate during a first time period, in which the first bit rate is a bit rate corresponding to a historical estimated bandwidth; detecting a first bandwidth of the network based on the first padding data packet; sending a second padding data packet at a second bit rate in a second time period subsequent to the first time period, in which the second bit rate is a bit rate corresponding to the first bandwidth, and a sum of the first time period and the second time period is a detected network congestion duration; and determining a maximum value of a bandwidth detected within the detected network congestion duration as a bandwidth of the network.

In a second aspect, there is provided an apparatus for bandwidth estimation, and the apparatus includes a first sending module, a detection module, a second sending module and a determination module. The first sending module is configured to, in response to determining that congestion occurs in a network, send a first padding data packet at a first bit rate during a first time period, in which the first bit rate is a bit rate corresponding to the historical estimated bandwidth; the detection module is configured to detect a first bandwidth of the network based on the first padding data packet; the second sending module is configured to send a second padding data packet at a second bit rate in a second time period subsequent to the first time period, in which the second bit rate is a bit rate corresponding to the first bandwidth, and a sum of the first time period and the second time period is a detected network congestion duration; and the determination module is configured to determine a maximum value of a bandwidth detected within the detected network congestion duration as a bandwidth of the network.

In a third aspect, there is provided an electronic device, and the electronic device includes a processor and a memory, and a program or instruction stored on the memory and executable on the processor, in which the program or instruction, when executed by the processor, implements the steps described in the first aspect.

In a fourth aspect, there is provided a readable storage medium, on which a program or instruction is stored on the readable storage medium, and the program or instruction, when executed by a processor, implements the steps of the method as described in the first aspect.

In a fifth aspect, there is provided a chip, the chip includes a processor and a communication interface, the communication interface is coupled with the processor, and the processor is configured to run a program or an instruction, to implement the steps of the method as described in the first aspect.

In the embodiments of the present disclosure, the detected network congestion duration is divided into a first time period and a second time period, and a first padding data packet is sent at a first bit rate during the first time period, herein the first bit rate is a bit rate corresponding to the historical estimated bandwidth, and based on the first padding data packet, a first bandwidth of the network is detected. A second padding data packet is sent at a second bit rate during the second time period, herein the second bit rate is a bit rate corresponding to the first bandwidth, and the maximum value of the bandwidth detected during the detected network congestion duration is determined as the bandwidth of the network. By adaptively setting the bit rates of the first padding data packet and the second padding data packet, not only the bandwidth may be accurately estimated, but the impact on the network caused by sending the padding data packets may also be reduced.

### BRIEF DESCRIPTION OF DRAWINGS

Fig. 1a shows a schematic diagram of a bandwidth estimation;
Fig. 1b shows a schematic diagram of another bandwidth estimation;
Fig. 2 shows a flow schematic diagram of a method for bandwidth estimation provided in an embodiment of the present disclosure;
Fig. 3a shows a schematic diagram of a bandwidth estimation process provided in an embodiment of the present disclosure;
Fig. 3b shows a schematic diagram of comparison between time delay in an embodiment of the present disclosure and time delay in related technologies;
Fig. 4 shows a structure schematic diagram of an apparatus for bandwidth estimation provided in an embodiment of the present disclosure; and
Fig. 5 shows a structure schematic diagram of an electronic device provided in an embodiment of the present disclosure.

### DETAILED DESCRIPTION

Technical schemes in embodiments of the present disclosure are clearly described below in combination with drawings in the embodiments of the present disclosure. Apparently, the embodiments described are a part of the embodiments of the present disclosure, not all of the embodiments. Based on the embodiments in the present disclosure, all other embodiments obtained by those of ordinary skill in the art shall fall within the scope of protection of the present disclosure.

The terms "first", "second" and the like in the description and claims of the present disclosure are used to distinguish similar objects and not to describe a specific sequence or a precedence order. It should be understood that the terms used in this way may be interchanged in appropriate circumstances, so that the embodiments of the present disclosure may be implemented in an order other than those illustrated or described here, and the objects distinguished by "first" and "second" are usually of the same class, without limiting the number of the objects, for example, the first object may be one or multiple. In addition, in the description and claims, "and/or" represents at least one of the connected objects, and the character "/" generally represents a "or" relationship between the front and back associated objects.

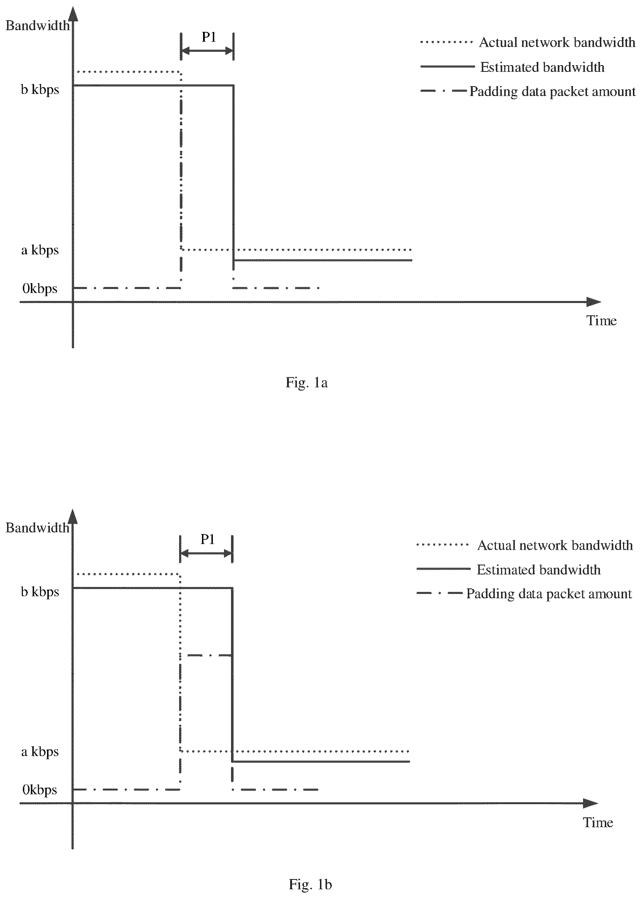

In a technical scheme provided by related technologies, during sudden network congestion, the estimated bandwidth of a bandwidth estimation module is generally the maximum bandwidth required. In order to accurately measure the capacity of a network at this time, padding data packets need to be sent, and the effect of this padding data packet is: to increase the transmission bit rate to the estimated bandwidth when the media bit rate underflows (the actual media bit rate is lower than the estimated bandwidth), and prevent the estimated bandwidth from being too low when the media bit rate underflows. As shown in Fig. 1a, at a time T1, the network experiences congestion and the available bandwidth is decreased from b kbps to a kbps. In order to accurately estimate the available bandwidth of the network at this moment, padding is used to increase the media bandwidth to b kbps during media underflow, until the available bandwidth of the network is estimated at a T2 (T2=T1+P1) time, and it is stopped sending the padding.

By using the above technical scheme, during the sudden network congestion, a large amount of padding data is sent, and large time delay or large packet loss is triggered. In addition, when the network is congested, the available bandwidth of the network is lower, the time delay or packet loss triggered is larger, which seriously affects the subjective experience of users.

For the above technical scheme, an improved technical scheme is provided by the related technologies. In this technical scheme, as shown in Fig. 1b, the amount of the padding is limited, and the upper limit c kbps of the padding is set to be less than b kbps. When the upper limit c kbps of the padding is equal to b kbps, the advantage of this scheme is to reduce the impact of the padding data on the network, but when the available bandwidth of the network exceeds the set threshold c kbps during the congestion, the estimated available bandwidth of the network may be smaller, so that the estimated bandwidth is not accurate.

In view of this, an embodiment of the present disclosure provides a bandwidth estimation scheme.

The bandwidth estimation scheme provided in the embodiment of the present disclosure is described in detail below by some embodiments and application scenes thereof in combination with the drawings.

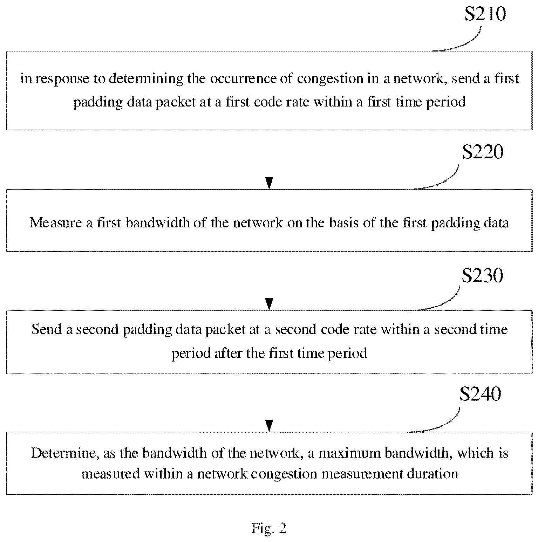

Fig. 2 shows a flow schematic diagram of a method for bandwidth estimation in an embodiment of the present disclosure, and this method may be executed by a communication device. In other words, the method may be executed by software or hardware installed on the communication device, and the communication device may be a terminal device. As shown in Fig. 2, the method may include the following steps.

S210: in response to determining that congestion occurs in a network, send a first padding data packet at a first bit rate during a first time period.

The first bit rate is a bit rate corresponding to the historical estimated bandwidth, the historical estimated bandwidth may be determined according to a bandwidth result detected in the previous detected network congestion cycle. When the current network experiences congestion for the first time, the historical estimated bandwidth may be a preset bandwidth value, and the preset bandwidth value may be set according to the actual situation, it is not specifically limited in the present disclosure.

It may be understood that at a certain time point, when the demand for a certain resource in the network exceeds an available portion that the resource may provide, the network performance may be decreased, to cause the congestion. At this time, it is necessary to measure the capacity of the network by sending the first padding data packet. The first bit rate of the first padding data packet is the bit rate corresponding to the historical estimated bandwidth, namely a bit rate corresponding to the bandwidth estimated after the previous network congestion.

The bandwidth refers to the amount of data that may be transmitted per unit of time, the unit is usually MB/s, namely megabits per second. The bit rate is the number of data bits transmitted per unit of time, the unit is usually kbps, namely kilobits per second. Converting the unit of the bandwidth into the unit of the bit rate is the corresponding (or matching) bit rate of the bandwidth. For example, for a bandwidth of 2 MB, its corresponding bit rate is 2048 Kbps.

Specifically, the historical estimated bandwidth may be the network bandwidth used during the previous detected network congestion cycle. Therefore, when estimating the bandwidth of the current detected network congestion cycle, the historical estimated bandwidth may be used as a reference, namely the first bit rate of the first padding data packet is set as a bit rate matched with the historical estimated bandwidth. This achieves bit rate self-adaptation and more accurately estimates the actual available bandwidth of the current network.

S220: detect a first bandwidth of the network based on the first padding data packet.

It may be understood that the first bandwidth of the network is detected based on the first padding data packet during a first time period, herein the first time period refers to a duration of continuously sending the first padding data packet.

Optionally, the first time period may be 100 ms~300 ms. It may be understood that when the first time period is below 100 ms, it may cause inaccurate detection of the first bandwidth due to network jitter, and when the first time period is above 300 ms, it may cause a significant impact on the network.

S230: send a second padding data packet at a second bit rate in a second time period subsequent to the first time period.

The second bit rate is a bit rate corresponding to the first bandwidth, and a sum of the first time period and the second time period is a detected network congestion duration.

It may be understood that the second padding data packet is set by using the bit rate of the first bandwidth detected during the first time period as the second bit rate, it is possible to avoid the problem of increasing the burden on the network and causing the greater impact on the network by only sending the first padding data packet to measure the estimated bandwidth during the entire detected network congestion duration.

In an embodiment, the first padding data packet and the second padding data packet may include one of the following:
(1) data without specific meaning; by adopting this possible embodiment and using the meaningless data as the padding packet, it is possible to avoid a situation in which a receiving end may not receive a useful data packet timely due to network congestion.
(2) data sent before the congestion starts to occur in the network; by adopting this possible embodiment, the data sent before the network begins to experience the congestion may be used as the padding packet, as to guarantee the reliability of the data sent before the network begins to experience the congestion.

S240: determine a maximum value of a bandwidth detected within the detected network congestion duration as a bandwidth of the network.

It may be understood that during the detected network congestion duration, the maximum confirmed bandwidth of the network is detected in the first time period by sending the first padding data packet, and the maximum confirmed bandwidth of the network is detected in the second time period by sending the second padding data packet. Therefore, the estimated bandwidth is determined as the larger maximum confirmed bandwidth detected in the first time period and the second time period.

In the embodiment of the present disclosure, the detected network congestion duration is divided into the first time period and the second time period, and the first padding data packet is sent at the first bit rate during the first time period, herein the first bit rate is a bit rate corresponding to the historical estimated bandwidth, and after the first padding data packet is sent, the network is detected, to obtain the actual available first bandwidth of the network during the first time period. The second padding data packet is sent at the second bit rate during the second time period, herein, the second bit rate is a bit rate corresponding to the first bandwidth, and finally the estimated bandwidth is determined as the maximum value of the bandwidth detected during the detected network congestion duration. In this way, by adaptively setting the bit rates of the first padding data packet and the second padding data packet, not only the estimated bandwidth may be accurately measured, but the impact on the network caused by sending the padding data packet may also be reduced.

In an embodiment, the determining that the congestion occurs in the network may include: determining that congestion occurs in the network when an over use of the network is detected. For example, when the network is not congested, determining that the congestion occurs in the network when detecting network over use for the first time.

It may be understood that the over use refers to a phenomenon that the amount of data reaching a certain part of a communication subnet is too large, and this part of the network is too late to process, so that the performance of this part or even the entire network is decreased, such as transmission timeout (for example, the transmission time exceeds a first threshold), data packet loss (for example, the data packet loss rate exceeds a second threshold). In this embodiment, when the first occurrence of the network over use is detected, it is determined that the network begins to experience the congestion, thereby it may be guaranteed that the notification of the network congestion is acquired timely.

Preferably, a Web Real-Time Communications (WebRTC) technology may be used to detect whether the network experiences the over use, namely when the network is congested, the packet loss rate may be used to reflect the network congestion situation. When the packet loss rate is very low or zero, it is indicated that the network is in good condition; and on the contrary, when the packet loss rate is increased, it is indicated that the network condition becomes poor. It is also possible to determine whether the network is overused by the increasing trend of the delay difference in the arrival time of each group of the data packet.

In an embodiment, the first time period may be a time interval between the first over use and the n-th over use in n continuously detected over uses, and n is an integer greater than 1. For example, the first time period may be a time interval between two adjacent over uses. Alternatively, the first time period may also be determined according to the minimum time required to detect the stable network bandwidth, such as 100 ms, it may be determined according to actual applications, and it is not limited in the embodiment of the present disclosure.

In this embodiment, the first time period is determined by the time interval between the first over use and the n-th over use in n continuously detected over uses, to achieve high-precision time division and guarantee the accuracy of the estimated bandwidth.

In an embodiment, the detected network congestion duration may be a time interval between the first over use and the N-th over use in N continuously detected over uses, N is an integer greater than 1, and N>n. The detected network congestion duration may be a time interval between the first over use and the fifth over use in 5 continuously detected over uses, and the first time period is a time interval between the second detected over use and the first detected over use. But it is not limited to this, in specific applications, it may be determined according to the actual state of the network.

It should be noted that the first time period and the second time period constitute the detected network congestion duration. Therefore, the number of network over uses occurring in the first time period is less than the number of network over uses occurring in the entire detected network congestion duration, namely N>n, thereby the aggravation of the network congestion caused by sending the padding data packet with the historical estimated bandwidth may be avoided during the entire detected network congestion duration, and the problem of inaccurate bandwidth estimation due to the too small bandwidth of the sent padding data packet may also be avoided.

In an embodiment, the detecting a first bandwidth of the network based on the first padding data packet, includes: acquiring the first bandwidth by tracking the maximum confirmed bandwidth in the first time period through a filter.

It may be understood that the filter not only has a small impact on the network but also amplifies a signal. In this way, the maximum confirmed bandwidth may be detected in first time period to acquire the first bandwidth without affecting network transmission.

In another embodiment, the maximum confirmed bandwidth tracked by the filter expires subsequent to an end of the first time period.

It may be understood that the function of the filter during the first time period is to detect the maximum confirmed bandwidth during the first time period, the maximum confirmed bandwidth is used to acquire the first bandwidth, and the first bandwidth is used to determine the bit rate of the second padding data packet during the second time period. Therefore, subsequent to an end of the first time period, the maximum confirmed bandwidth expires, thereby the interference with the detection of the maximum confirmed bandwidth during the second time period is avoided.

It should be noted that the data sent before the network congestion begins may be sent for multiple times, because multiple data sent may be received even when discarded in the network.

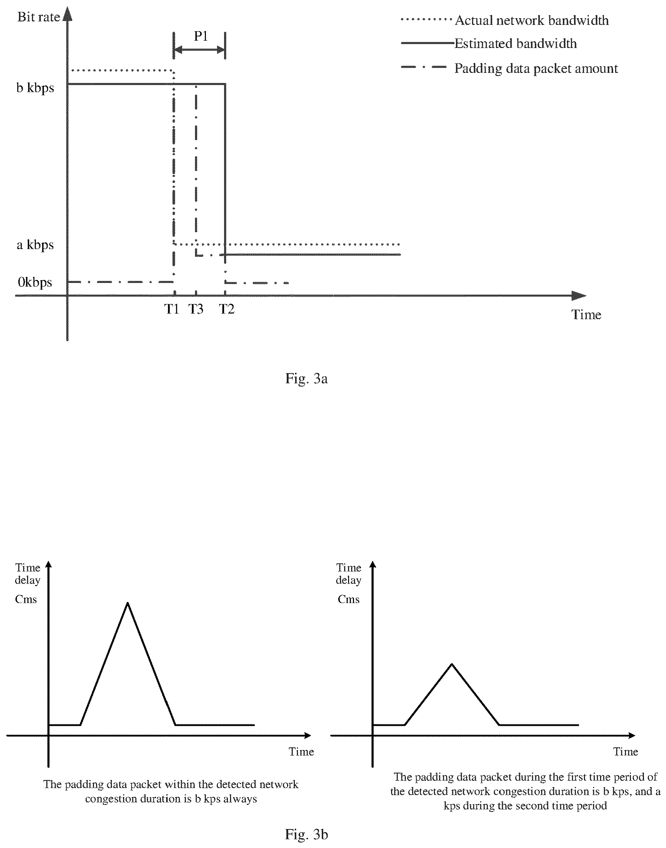

Fig. 3a shows a schematic diagram of a bandwidth estimation process in an embodiment of the present disclosure. In Fig. 3a, it is assumed that the following situation occurs: the network is firstly overused at a time T1, and the actual bandwidth of the network is b kps before the time T1 and becomes a kps subsequent to the time T1.

In response to the above situation, in Fig. 3a, the embodiment of the present disclosure sets the first padding amount to b kps at the time T1, and the effective time of this padding is P1. Then, the filter is used to track the maximum confirmed bandwidth during the time period P1, the maximum confirmed bandwidth is obtained as a kps, and the maximum confirmed bandwidth expires at a time T2. At the time T2, the second padding amount is set according to the maximum confirmed bandwidth obtained, and the second padding amount is a kps. At this time, the bandwidth obtained from the filter is the maximum transmitted bandwidth a kbps after padding is added, and a kbps is determined as the estimated bandwidth. At a time T3, the detected network congestion ends, and the padding amount is no longer set. By the technical scheme provided in the embodiment of the present disclosure, the accuracy of bandwidth estimation may be guaranteed, and the network time delay may be reduced. As shown in Fig. 3b, compared to the padding amount of bkps from T1 to T3, adopting the technical scheme provided in the embodiment of the present disclosure may significantly reduce the time delay.

In this embodiment, the amount of padding is set twice. For the first time, the amount of padding is set to the historical estimated bandwidth b kbps, and for the second time, the amount of padding is set to the maximum confirmed bandwidth a kbps tracked by the filter during the time period P1. By adaptively setting the first padding amount and the second padding amount, not only the estimated bandwidth may be accurately measured, but the impact on the network caused by sending the padding data packet may also be reduced.

In the method for bandwidth estimation provided in the embodiment of the present disclosure, the executive subject may be an apparatus for bandwidth estimation. The method for bandwidth estimation executed by the apparatus for bandwidth estimation in the embodiment of the present disclosure is taken as an example, the apparatus for bandwidth estimation provided in the embodiment of the present disclosure is described.

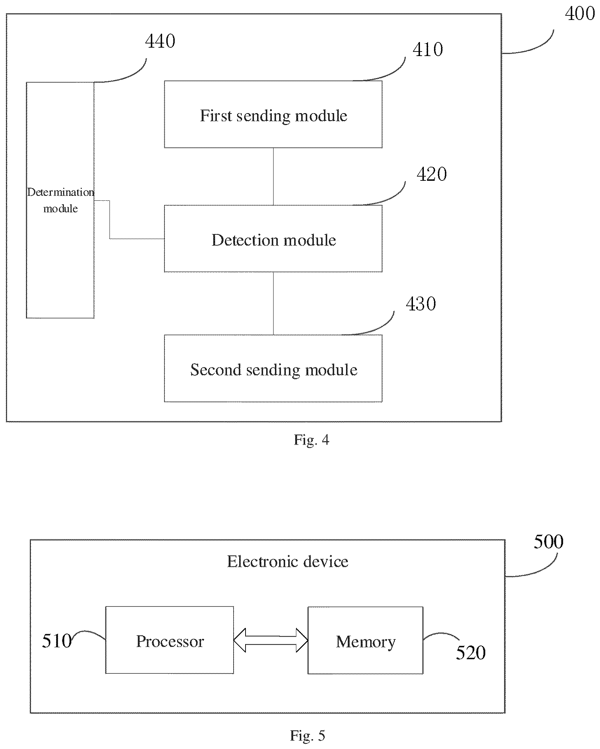

Fig. 4 shows a structure schematic diagram of an apparatus for bandwidth estimation provided in an embodiment of the present disclosure. As shown in Fig. 4, the apparatus for bandwidth estimation 400 may include: a first sending module 410, a detection module 420, a second sending module 430, and a determination module 440.

In the embodiment of the present disclosure, the first sending module 410 is configured to, in response to determining that congestion occurs in a network, send a first padding data packet at a first bit rate during a first time period, herein the first bit rate is a bit rate corresponding to the historical estimated bandwidth; the detection module 420 is configured to, detect a first bandwidth of the network based on the first padding data packet; the second sending module 430 is configured to, send a second padding data packet at a second bit rate in a second time period subsequent to the first time period, herein the second bit rate is a bit rate corresponding to the first bandwidth, and the sum of the first time period and the second time period is a detected network congestion duration; and the determination module 440 is configured to determine the maximum value of the bandwidth detected within the detected network congestion duration as the bandwidth of the network.

In an embodiment, the determining that congestion occurs in a network in the first sending module 410 includes: determining that congestion occurs in the network when an over use of the network is detected.

In an embodiment, the first time period in the first sending module 410 is a time interval between the first over use and the n-th over use in n continuously detected over uses, and n is an integer greater than 1.

In an embodiment, the detected network congestion duration in the second sending module 430 is a time interval between the first over use and the N-th over use in N continuously detected over uses, N is an integer greater than 1, and N>n.

In an embodiment, the detection module 420 is also configured to track the maximum confirmed bandwidth within the first time period through a filter to obtain the first bandwidth.

In an embodiment, the maximum confirmed bandwidth tracked by the filter expires subsequent to an end of the first time period.

In an embodiment, the first padding data packet and the second padding data packet in the first sending module 410 and the second sending module 430 may include one of the following: data without specific meaning; and data sent before the congestion starts to occur in the network.

Optionally, as shown in Fig. 5, an embodiment of the present disclosure further provides an electronic device 500, including a processor 510 and a memory 520, as well as a program or instruction stored on the memory 520 and executable on the processor 510. The program or instruction implements the various processes of the above method embodiments when executed by the processor 510, and may achieve the same technical effect. In order to avoid repetition, it is not repeatedly described here.

An embodiment of the present disclosure further provides a readable storage medium, a program or instruction is stored on the readable storage medium, the program or instruction implements the various processes of the above method for bandwidth estimation embodiments when executed by a processor, and may achieve the same technical effect. In order to avoid repetition, it is not repeatedly described here.

The processor is the processor in the terminal in the above embodiment. The readable storage medium includes a computer-readable storage medium such as a read-only memory (ROM), a random access memory (RAM), a magnetic disk or an optical disk.

An embodiment of the present disclosure further provides a chip, the chip includes a processor and a communication interface, the communication interface is coupled with the processor, and the processor is configured to run a program or instruction, which implements the various processes of the above method for bandwidth estimation embodiments, and may achieve the same technical effect. In order to avoid repetition, it is not repeatedly described here.

It should be understood that the chip mentioned in the embodiment of the present disclosure may also be referred to as a system level chip, a system chip, a chip system, or a system on chip, or the like.

An embodiment of the present disclosure further provides a computer program/program product, the computer program/program product is stored in a storage medium, and the computer program/program product is executed by at least one processor to implement the various processes of the above method for bandwidth estimation embodiments, and the same technical effect may be achieved. In order to avoid repetition, it is not repeatedly described here.

It should be noted that in this article, the terms "including," "containing," or any other variations thereof are intended to encompass non-exclusive inclusion, such that a process, method, article, or apparatus that includes a series of elements not only includes those elements, but also includes other elements that are not explicitly listed, or also includes elements inherent to such process, method, article, or apparatus. Without further limitations, an element limited by the statement "including one..." does not exclude the existence of other identical elements in the process, method, article, or apparatus that includes this element. In addition, it should be pointed out that the scopes of the methods and apparatuses in the embodiments of the present disclosure are not limited to executing the functions in the order shown or discussed, and may also include executing the functions in a substantially simultaneous manner or in the opposite order according to the functions involved. For example, the described method may be executed in a different order than those described, and various steps may be added, omitted, or combined. Additionally, the features described with reference to some examples may be combined in other examples.

By the description of the above embodiments, those skilled in the art may clearly understand that the above embodiment method may be implemented by combining software with a necessary general hardware platform. Certainly, it may also be implemented by hardware, but under many circumstances, the former is the better embodiment. Based on this understanding, the technical schemes of the present disclosure may essentially be embodied in the form of a computer software product, and the computer software product is stored in a storage medium (such as ROM/RAM, magnetic disk, and optical disk) and includes a plurality of instructions to enable a terminal (it may be a mobile phone, a computer, a server, an air conditioner, or a network device or the like) to execute the methods in various embodiments of the present disclosure.

The embodiments of the present disclosure are described above in combination with the drawings, but the present disclosure is not limited to the specific embodiments described above. The above specific embodiments are only schematic and not restrictive. Those of ordinary skill in the art may also make many forms under the inspiration of the present disclosure without departing from the scope of protection of the purposes and claims of the present disclosure, which shall fall within the scope of protection of the present disclosure.

## Claims

1. A method for bandwidth estimation, comprising:
in response to determining that congestion occurs in a network, sending a first padding data packet at a first bit rate during a first time period, wherein the first bit rate is a bit rate corresponding to a historical estimated bandwidth;
detecting a first bandwidth of the network based on the first padding data packet;
sending a second padding data packet at a second bit rate in a second time period subsequent to the first time period, wherein the second bit rate is a bit rate corresponding to the first bandwidth, and a sum of the first time period and the second time period is a detected network congestion duration; and
determining a maximum value of a bandwidth detected within the detected network congestion duration as a bandwidth of the network.

2. The method according to claim 1, wherein the determining that congestion occurs in a network, comprises:
determining that congestion occurs in the network when an over use of the network is detected.

3. The method according to claim 2, wherein the first time period is a time interval between a first over use in n continuously detected over uses and a n-th over use in the n continuously detected over uses, and n is an integer greater than 1.

4. The method according to claim 3, wherein the detected network congestion duration is a time interval between a first over use in N continuously detected over uses and a N-th over use in the N continuously detected over uses, N is an integer greater than 1, and N>n.

5. The method according to any one of claims 1 to 4, wherein the detecting a first bandwidth of the network based on the first padding data packet, comprises:
acquiring the first bandwidth by tracking a maximum confirmed bandwidth in the first time period through a filter.

6. The method according to claim 5, wherein the maximum confirmed bandwidth tracked by the filter expires subsequent to an end of the first time period.

7. The method according to any one of claims 1 to 6, wherein the first padding data packet and the second padding data packet comprise at least one of the group consisting of:
data without specific meaning; and
data sent before the congestion starts to occur in the network.

8. An apparatus for bandwidth estimation, comprising:
a first sending module, configured to, in response to determining that congestion occurs in a network, send a first padding data packet at a first bit rate during a first time period, wherein the first bit rate is a bit rate corresponding to the historical estimated bandwidth;
a detection module, configured to, detect a first bandwidth of the network based on the first padding data packet;
a second sending module, configured to, send a second padding data packet at a second bit rate in a second time period subsequent to the first time period, wherein the second bit rate is a bit rate corresponding to the first bandwidth, and a sum of the first time period and the second time period is a detected network congestion duration; and
a determination module, configured to determine a maximum value of a bandwidth detected within the detected network congestion duration as a bandwidth of the network.

9. An electronic device, comprising a processor, a memory, and a program or instruction stored on the memory and executable on the processor, wherein the program or instruction, when executed by the processor, implements the method for bandwidth estimation according to any one of claims 1-7.

10. A readable storage medium, wherein a program or instruction is stored on the readable storage medium, and the program or instruction, when executed by a processor, implements the method for bandwidth estimation according to any one of claims 1-7.
